# EUROPÄISCHE PATENTSCHRIFT

(11) **EP 2 945 839 B1**
(45) Veröffentlichungstag und Bekanntmachung des Hinweises auf die Patenterteilung: **23.09.2020**
(21) Anmeldenummer: 14701671.1
(22) Anmeldetag: 14.01.2014
(51) Int. Cl.: B62J 9/00

(54) **TRANSPORTVORRICHTUNG ZUR BEFESTIGUNG AN EINEM FAHRZEUG-RAHMENELEMENT**
TRANSPORT DEVICE FOR FIXING TO A VEHICLE FRAME ELEMENT
DISPOSITIF DE TRANSPORT POUR ÊTRE FIXÉE À UN ÉLÉMENT DE CADRE DE D'UN VÉHICULE

(30) Priorität: 17.01.2013 DE 102013000790
(43) Veröffentlichungstag der Anmeldung: 25.11.2015
(73) Patentinhaber: Touratech GmbH, 78078 Niedereschach (DE)
(72) Erfinder: SCHANZ, Jochen, 78078 Niedereschach (DE); SCHWARZ, Herbert, 78078 Niedereschach (DE)
(74) Vertreter: Schmidbauer, Andreas Konrad
(86) Internationale Anmeldenummer: PCT/EP2014/000070
(87) Internationale Veröffentlichungsnummer: WO 2014/111248

(56) Entgegenhaltungen:
- EP-A1- 2 500 246
- WO-A1-01/12496
- WO-A1-2007/045371
- WO-A1-2008/014616
- WO-A1-2011/025390
- WO-A1-2011/088814
- US-B1- 6 347 804

## Beschreibung

Die vorliegende Erfindung betrifft eine Transportvorrichtung zur Befestigung an einem Fahrzeug-Rahmenelement, wie beispielsweise einen Motorradkoffer. Die Transportvorrichtung kann aber auch eines anderen Typs sein, wie beispielsweise ein Fahrradträger oder eine Dachbox, die an Dachträgern oder auch an einem anderen Fahrzeug-Rahmenelement befestigt werden.

Die gattungsgemäße DE 10 2010 005 272 beschreibt beispielsweise einen Motorradkoffer mit einem speziellen Verriegelungssystem. Bei dem bekannten Motorradkoffer werden zwei entgegengesetzt weisende Stützelemente zwischen zwei parallele Streben eines Fahrzeug-Rahmenelements geklemmt und in dieser Position über einen bewegbaren Riegel verriegelt. Der Riegel ist kofferseitig angebracht und über einen innerhalb des Koffers liegenden Betätigungsmechanismus lösbar.

Sowohl das Anbringen als auch das Lösen dieses Koffers ist daher relativ aufwendig, und jeweils mit einem Öffnen des Koffers verbunden, was insbesondere bei feuchtem Wetter unerwünscht ist. Es ist daher eine Aufgabe der vorliegenden Erfindung eine Transportvorrichtung vorzusehen, welche eine einfache Befestigung an einem Fahrzeug-Rahmenelement mit wenigstens zwei parallelen Streben ermöglicht.

Erfindungsgemäß wird diese Aufgabe durch eine Transportvorrichtung nach Anspruch 1 gelöst. Weitere Ausgestaltungen der Erfindung ergeben sich aus den Unteransprüchen.

Insbesondere ist eine Transportvorrichtung zur Befestigung an einem Fahrzeug-Rahmenelement mit wenigstens zwei parallelen Streben vorgesehen, die einen Gepäckaufnahmebereich, und wenigstens ein Seitenteil mit einer daran angebrachten Befestigungsanordnung aufweist. Die Befestigungsanordnung weist wenigstens ein erstes am Seitenteil befestigtes Stützelement auf, das wenigstens eine erste Vertiefung zur wenigstens teilweisen Aufnahme einer ersten der Streben aufweist, wobei das erste Stützelement starr am Seitenteil befestigt ist und die erste Vertiefung in eine erste Richtung weist, wenigstens ein zweites am Seitenteil befestigtes Stützelement, das eine zweite Vertiefung zur wenigstens teilweisen Aufnahme einer zweiten der Streben aufweist, wobei das zweite Stützelement um eine Schwenkachse herum schwenkbar am Seitenteil befestigt ist, um zwischen einer geöffneten und einer geschlossenen Position bewegbar zu sein, wobei die zweite Vertiefung in der geschlossenen Position des zweiten Stützelements in eine zweite Richtung um 180° entgegengesetzt zur ersten Richtung weist, und wobei dass zweite Stützelement bei einer Bewegung zwischen der geöffneten und der geschlossenen Position aus der Sicht des ersten Stützelements über die Schwenkachse hinweg bewegt wird, und wenigstens ein Riegel, der in einer starren Beziehung zu dem zweiten Stützelement und mit diesem schwenkbar am Seitenteil befestigt ist. Ferner weist die Transportvorrichtung wenigstens eine Verriegelungseinheit auf, die am Seitenteil befestigt ist und einen feststehenden Teil und einen schwenkbaren Teil aufweist, wobei der schwenkbare Teil zwischen einer geschlossenen Position und einer geöffneten Position bewegbar ist, und in der geschlossenen Position in der Lage ist den Riegel in einer geschlossenen Position des zweiten Stützelements zu verriegeln. Eine solche Transportvorrichtung ermöglicht eine einfache Anbringung an entsprechenden parallelen Streben an einem Fahrzeug durch einfaches schräges ansetzten und einschwenken, wobei sie in der eingeschwenkten oder geschlossenen Position verriegelt werden kann. Durch die Bewegung der zweiten Stützelemente über die Schwenkachse hinweg, ist Transportvorrichtung in der eingeschwenkten Position auch bei geöffneter Verriegelungseinheit zunächst gehalten, da bei einem Ausschwenken zunächst die Klemmkraft zwischen den Streben ansteigt.

Bei einer Ausführungsform ist der schwenkbare Teil der Verriegelungseinheit in die geschlossene Stellung vorgespannt ist und so am Seitenteil angebracht ist, dass er bei einer Bewegung des zweiten Stützelements von der geöffneten Position in die geschossene Position den Riegel kontaktiert, sich in eine geöffnete Position bewegt und anschließend automatisch in die geschlossene Position zurückkehrt, in der der schwenkbare Teil den Riegel verriegelt. Hierdurch kann auf einfache Weise eine automatische Verriegelung während des Einschwenkens der Transportvorrichtung an die Streben erreicht werden.

Um zusätzliche Sicherheit gegen ein unbeabsichtigtes Öffnen der Verriegelungseinheit und/oder gegen Diebstahl vorzusehen, weist die Verriegelungseinheit vorzugsweise ein Schloß aufweist, das so angeordnet ist, dass es in einer abgeschlossenen Position eine Bewegung zwischen dem feststehenden Teil und dem bewegbaren Teil verhindert und in einer geöffneten Position freigibt.

Bevorzugt sind die Verriegelungseinheit sowie die ersten und zweiten Stützelemente an derselben Seite des Seitenteils befestigt, welche vom Gepäckaufnahmebereich weg weist. Dies ermöglicht einen einfachen Zugriff auf die Befestigungsvorrichtung, insbesondere unabhängig von einem Beladzustand des Gepäckaufnahmebereichs und ohne die Notwendigkeit einen ggf. geschlossenen Gepäckaufnahmebereich zu öffnen. Für einen einfachen AUfbau der Vorrichtung sind der Riegel und das zweite Stützelement vorzugsweise an einem gemeinsamen Schwenkbügel angebracht.

Bei einer Ausführungsform sind das erste und/oder das zweite Stützelement wenigstens teilweise aus einem elastischen Material, oder elastisch an dem Seitenteil angebracht, um eine Bewegung der Vertiefungsoberfläche in die erste und/oder zweite Richtung zu erlauben. Hierdurch können einerseits Toleranzen hinsichtlich der Abstände zwischen den Streben aufgenommen werden und andererseits wird hierdurch die Überquerung der Schwenkachse während der Schwenkbewegung der zweiten Stützelemente erleichtert.

Bei der bevorzugten Ausführungsform ist die Transportvorrichtung ein Motorradkoffer, der durch die obigen Merkmale eine einfache Montage und einer einfaches Lösen mit einer Hand ermöglicht. Vorteilhaft ist insbesondere auch die Kombination aus einem Fahrzeug mit einem Fahrzeug-Rahmenelement mit wenigstens zwei parallelen Streben, und einer zuvor beschriebenen Transportvorrichtung, wobei das Fahrzeug vorzugsweise ein Motorrad ist.

Die Erfindung wird nachfolgend unter Bezugnahme auf die Zeichnungen näher erläutert; in den Zeichnungen zeigt:
- Fig. 1: eine perspektivische Rückansicht eines Motorradkoffers mit einer Befestigungsvorrichtung in einem geschlossenen Zustand;
- Fig.2: eine perspektivische Rückansicht des Motorradkoffers gemäß Figur 1 mit der Befestigungsvorrichtung im geöffneten Zustand;
- Fig.3: eine perspektivische Rückansicht des Motorradkoffers gemäß Figur 1 mit einem schematisch dargestellten Fahrzeug-Rahmenelement und der Befestigungsvorrichtung in einem geschlossenen Zustand;
- Fig.4: eine perspektivische Rückansicht des Motorradkoffers gemäß Figur 1 mit einem schematisch dargestellten Fahrzeug-Rahmenelement und der Befestigungsvorrichtung in einem geöffneten Zustand;
- Fig.5: eine vergrößerte Teilansicht des Motorradkoffers gemäß Figur 2 mit der Befestigungsvorrichtung in einem geöffneten Zustand und einer geöffneten Verriegelungseinheit;
- Fig. 6: eine perspektivische Seitenansicht des Motorradkoffers gemäß Figur 1 mit der Befestigungsvorrichtung in einem geschlossenen Zustand.

Die Figuren zeigen unterschiedliche perspektivische Ansichten eines Motorradkoffers 1. In der nachfolgenden Beschreibung verwendete Richtungsangaben wie links, rechts, oben, unten beziehen sich auf die Darstellung des Motorradkoffers 1 in den Zeichnungen und sollen nicht einschränkend sein, obwohl sie bevorzugte Anordnungen beschreiben können. Angaben wie Horizontal und Vertikal gehen davon aus, dass der Motorradkoffer 1 in einer aufrechten Position auf einer horizontalen Auflage steht. Die Bezeichnung im Wesentlichen soll bezogen auf Winkelangaben eine Abweichung bis zu 5°, bevorzugt bis zu 2° umfassen.

Der Motorradkoffer 1 wird im Wesentlichen durch einen Kofferkörper 3 sowie ein passendes Deckelelement 5 gebildet. Der Kofferkörper 3 weist einen Boden und Wandelemente auf, die einen Gepäckaufnahmeraum bilden. Der Gepäckaufnahmeraum ist über das Deckelelement 5 in bekannter Weise verschließbar und je nach Höhe des Deckelelements gegebenenfalls erweiterbar.

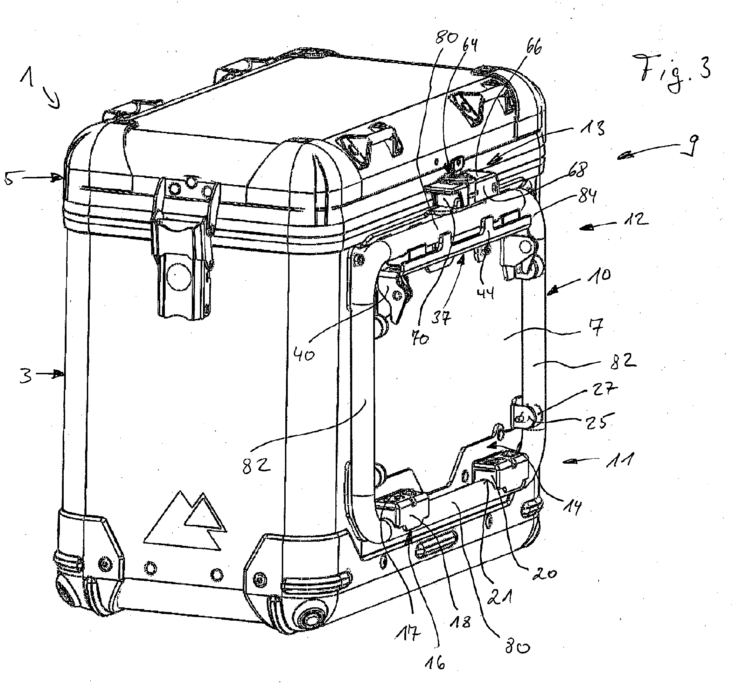

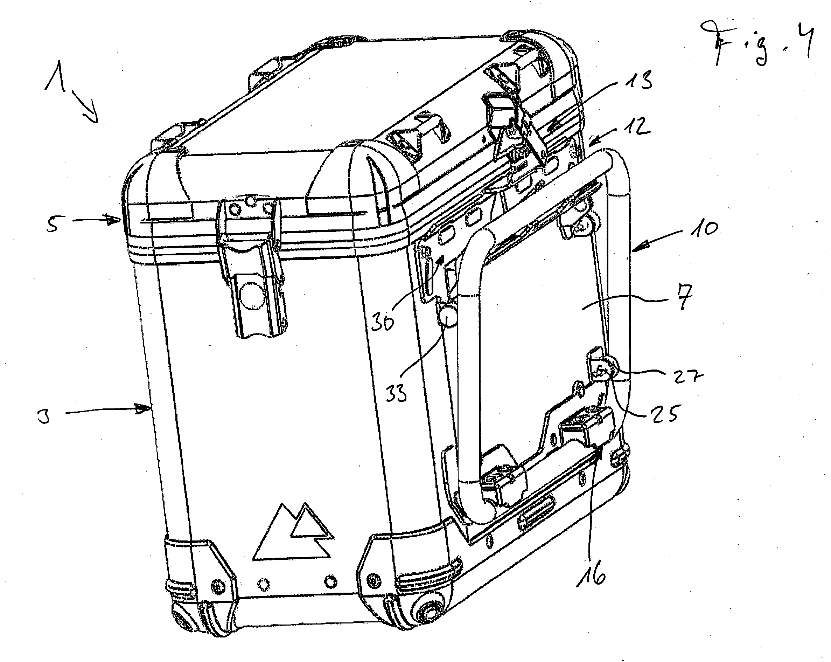

An einer Rückwand 7 des Kofferkörpers 3 ist eine Befestigungsvorrichtung 9 zur Befestigung des Motorradkoffers 1 an einem nicht dargestellten Motorrad vorgesehen. Die Befestigung erfolgt dabei über ein am Motorrad angebrachtes Rahmenelement 10, dass schematisch in den Figuren 3 und 4 dargestellt ist und dass nachfolgend noch näher erläutert wird.

Die Befestigungsvorrichtung 9 besteht bei der in den Figuren dargestellten Ausführung aus einer unteren Stützeinheit 11, einer oberen Stützeinheit 12 sowie einer Verriegelungseinheit 13.

Die untere Stützeinheit 11 besitzt eine flach an der Rückseite 7 angebrachte Grundplatte 14. Die Grundplatte 14 kann über geeignete Befestigungselemente, wie beispielsweise Nieten oder Schrauben, an der Rückseite 7 des Kofferkörpers 3 angebracht sein. Sie kann aber auch in anderer geeigneter Weise an der Rückseite angebracht sein, wie beispielsweise durch Kleben, Schweißen, Löten, Hartlöten etc.

Die Grundplatte 14 besitzt zwei Flansche 16, die jeweils einen ersten Flanschbereich 17 und einen zweiten Flanschbereich 18 aufweisen. Der erste Flanschbereich 17 erstreckt sich horizontal und im Wesentlichen senkrecht zur Grundplatte 14. Der zweite Flanschbereich 18 erstreckt sich von einem freien Ende des ersten Flanschbereichs 17 im Wesentlichen senkrecht nach unten und somit im Wesentlichen parallel zur Grundplatte 14. Die Flansche 16 sind so angeordnet, dass ihre entsprechenden Flanschbereiche 17 und 18 jeweils eine gemeinsame Ebene bilden.

Die Flanschbereiche 17 und 18 bilden in Kombination mit der Rückseite 7 des Kofferkörpers 3 einen nach unten geöffneten Aufnahmeraum mit einem rechteckigen Querschnitt. Dieser Aufnahmeraum ist an den Seiten offen, wie in den Figuren erkenntlich ist. In diesem Aufnahmeraum ist jeweils ein Stützelement 20 aufgenommen, das eine Vertiefung 21 aufweist. Das Stützelement 20 ist über geeignete Mittel, wie beispielsweise Schrauben oder Nieten, an dem ersten 17 oder zweiten 18 Flanschteil angebracht, und zwar derart, dass die Vertiefung 21 nach unten, d.h. weg vom Flanschteil 17 weist. Das Stützelement 20 ist aus einem elastischen Material oder kann auch in elastischer Weise an dem ersten Flanschelement angebracht sein.

So ist es beispielsweise möglich, das Stützelemente 20 aus einem nichtelastischen Material auszubilden und zwischen dem Stützelement 20 und dem ersten Flanschelement 17 ein elastisches Material vorzusehen, welches das Stützelement 20 nach unten vorspannen würde.

Die Vertiefung 21 besitzt einen kreisbogenförmigen Querschnitt und erstreckt sich durchgängig von einem Ende des Stützelements 20 zum anderen. Die Vertiefung 21 kann aber auch eine von der Kreisbogenform abweichende Form aufweisen. Die Vertiefung 21 dient zur zumindest teilweisen Aufnahme eines Teils des Fahrzeug-Rahmenelements 10, wie nachfolgend noch näher erläutert wird, und sie sollte daher an eine Umfangsform des aufzunehmenden Teils des Fahrzeug-Rahmenelements 10 angepaßt sein.

An der Grundplatte 14 sind zwei weitere Flansche 25 ausgebildet, die oberhalb der Flansche 16 liegen und hierzu seitlich nach außen versetzt sind. Die Flansche 25 erstrecken sich Vertikal und im Wesentlichen senkrecht zur Grundplatte 14. An den Flanschen 25 sind nach außen, dass heißt zu den linken und rechten Enden der Grundplatte weisende Ausrichtelemente 27 angebracht. Die Ausrichtelemente 27 bestehen beispielsweise aus einem Gummi oder Hartgummi und sie sollen eine Zentrierung zwischen vertikalen Streben des Fahrzeug-Rahmenelements 10 bewirken, wie nachfolgend noch näher erläutert wird. Hierzu sind die jeweiligen nach außen weisenden Oberflächen der Ausrichtelemente 27 so unter einem spitzen Winkel zueinander angeordnet, dass sie gemeinsam eine sich zum Koffer hin erweiternde konische Form bilden. Dies kann durch eine entsprechend Formgebung der Ausrichtelemente 27 oder einen entsprechenden Winkel der Flansche 25 erreicht werden.

Die obere Stützeinheit 12 weist wiederum ein Plattenelement 30 auf, das wie das Plattenelement 14 in geeigneter Weise fest an der Rückwand 7 des Kofferkörpers 3 angebracht ist. Bei der dargestellten Ausführungsform ist das Plattenelement über Schrauben angebracht, welche über entsprechende Langlöcher im Plattenelement 30 und/oder in der Rückwand 7 des Kofferkörpers 3 eine gewisse Abstandseinstellung zwischen der unteren Stützeinheit 11 und der oberen Stützeinheit 12 erlauben. Eine solche Abstandseinstellung kann natürlich auch im Bereich des unteren Plattenelements 11 vorgesehen sein, und dient dazu eine Anpassung der Befestigungseinheit 9 an unterschiedliche Rahmengeometrien zu ermöglichen. Das Plattenelement 30 ist im Wesentlichen flach, besitzt jedoch an einem oberen Ende einen sich schräg vom Kofferkörper weg erstreckenden Abschnitt 31, sowie eine Vielzahl von Flanschen, die nachfolgend noch näher erläutert werden.

Die Plattenelement 30 weist Flansche 32 auf, welche Ausrichtelemente 33 tragen. Diese können in der gleichen Weise aufgebaut und angeordnet sein wie die Flansche 25 und die Ausrichtelemente 27 der unteren Stützeinheit 11 und sind bevorzugt auch mit diesen ausgerichtet. Bevorzugt liegen die nach Außen weisenden Oberflächen der linksseitigen und der rechtseitigen Ausrichtelemente 27, 33 jeweils einer gemeinsamen sich vertikal erstreckenden Ebene.

Das Plattenelement 30 weist zwei seitlich beabstandete Flansche 35 auf, die sich vertikal und im Wesentlichen Senkrecht zum Plattenelement 30 erstrecken. An den freien Enden der Flansche 35, d. h. entfernt von der Rückwand 7 des Kofferkörpers 3, ist jeweils eine sich nach außen erstreckende Achse 36 vorgesehen. Diese können jeweils in geeigneter Weise am Flansch 35 angebracht sein. Die Achsen 36 an den jeweiligen Flanschen 35 sind koaxial zueinander ausgerichtet. Obwohl die Figuren jeweils zeigen, dass von jedem Flansch 35 eine eigene Achse 36 ausgeht, ist es natürlich auch möglich, eine durchgehende Achse, die sich durch beide Flansche 35 hindurch erstreckt und durch diese getragen wird, vorzusehen. Auch können die Achsen 36 nach innen weisend an den Flanschen 35 angebracht sein.

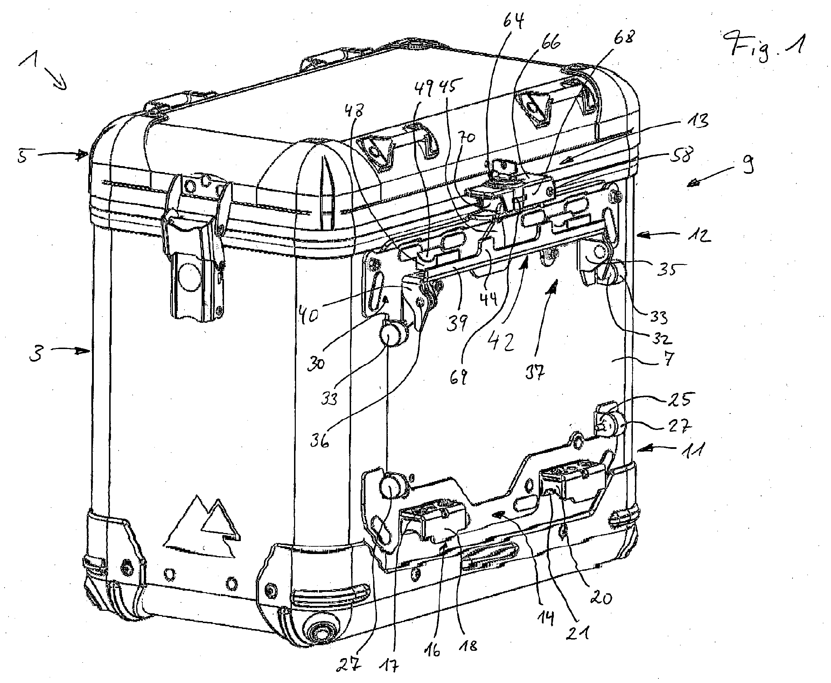

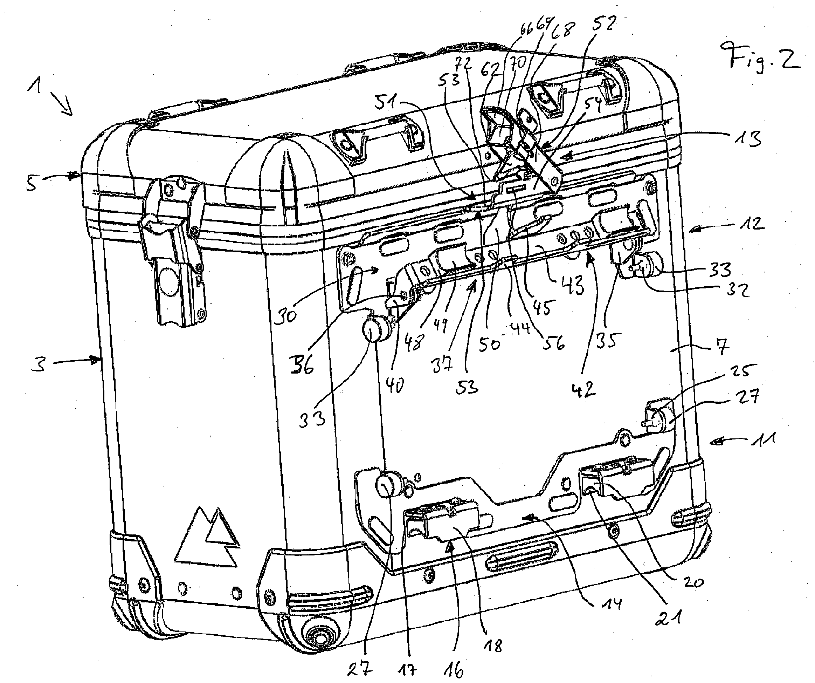

Auf den Achsen 36 ist ein Schwenkbügel 37 aufgenommen und schwenkbar gelagert. Der Schwenkbügel 37 ist zwischen einer geöffneten Position, wie sie in Figur 2 dargestellt ist, und einer geschlossenen Position, wie sie in Figur 1 dargestellt ist, schwenkbar.

Der Schwenkbügel 37 besitzt zwei sich im Wesentlichen vertikal erstreckende Endbereiche 40 sowie einen sich im Wesentlichen horizontal erstreckenden Mittelteil 42. Die Endbereiche 40 sind so angeordnet, dass sie die Flansche 35 umgreifen und sie weisen jeweils eine Aufnahmeöffnung zur Aufnahme einer entsprechenden der Achsen 36 auf. Die freien Enden der Endbereiche 40 sind so angeordnet und ausgeformt, dass sie eine Schwenkbewegung des Mittelteils 42 des Schwenkbügels 37 weg von der Rückwand 7 des Kofferkörpers 3 begrenzen, indem sie sich am Plattenelement abstützen, wie in Fig. 2 zu erkennen ist. Sie dienen somit als Anschlagselemente.

Der Mittelteil 42 des Schwenkbügels 37 besitzt einen sich horizontal erstreckenden Grundteil 43, einen ersten sich im Wesentlichen senkrecht zum Grundteil 43 nach oben erstreckenden Flansch 44 und einen zweiten sich senkrecht zum Grundteil 43 nach oben erstreckenden Flansch 45.

In dem Grundteil 43 ist eine Vielzahl von beabstandeten Befestigungslöchern 47 für Stützelemente 48 vorgesehen. Die Befestigungslöcher 47 sehen unterschiedliche Anbringungspunkte für die Stützelemente 48 vor, wie der Fachmann erkennen kann. Hierdurch kann eine dem Fahrzeug-Rahmenelement 10 angepaßte Anbringung der Stützelemente 48 vorgesehen werden.

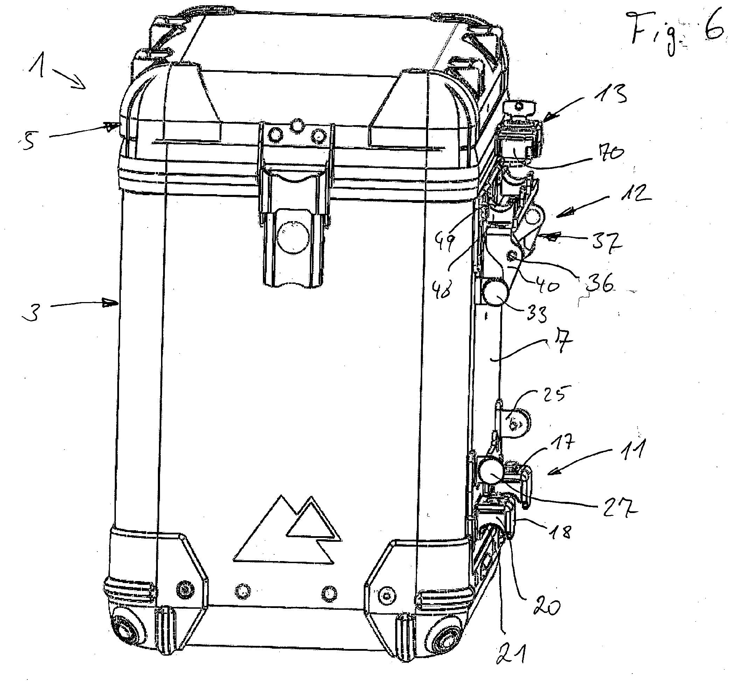

Die Stützelemente 48 können desselben Typs sein wie die Stützelemente 20 im Bereich der unteren Stützeinheit 11. Die Stützelemente 48 weisen wiederum eine Vertiefung 49 mit einer Kreisbogenform auf. Die Stützelemente 48 sind dabei derart an dem Mittelteil 42 des Schwenkbügels 37 angebracht, dass die entsprechenden Vertiefungen 49 in der geschlossenen Position des Schwenkbügels 37 (benachbart zur Rückwand 7 des Kofferkörpers 3) nach oben weisen. Insbesondere weisen die Vertiefungen 49 in einer um 180 Grad gedrehte Richtung bezüglich der Vertiefungen 21 der Stützelemente 20, wenn der Schwenkbügel 37 in der geschlossenen Position ist. Dies ist am Besten in der Darstellung gemäß Figur 6 zu erkennen. In der geöffneten Position des Schwenkbügels weisen die Vertiefungen 49 schräg (vom Kofferkörper 3 weg) nach oben. Dies ist am Besten in der Darstellung gemäß Figur 2 zu erkennen.

In der Darstellung gemäß Figur 6 ist ferner zu erkennen, dass ein Mittelpunkt der Vertiefungen 49 in der geschlossenen Position des Schwenkbügels 37 näher an der Rückseite des Kofferkörpers 3 liegt als die jeweiligen Achsen 36 für den Schwenkbügel 37. Gesehen von den unteren Stützelementen werden die Stützelemente 48 bei einer entsprechenden Bewegung des Schwenkbügels 37 aus der geöffneten Position in die geschlossene Position über die Achsen 36 Drehachsen hinweg bewegt. Somit wird ein Abstand zwischen den unteren Stützelementen 21 und den oberen Stützelementen 48 bei der Schwenkbewegung zunächst geringfügig erhöht und dann wieder verringert, wie der Fachmann erkennen kann.

Der Flansch 44 ist an einer von der Rückwand 7 des Kofferkörpers 3 weg weisenden Seite des Grundteils 43 ausgebildet und bietet eine seitliche Abstützung für die Stützelemente 48. Der Flansch 44 weist zwei Erhöhungen auf, welche über die Stützelemente 48 hinausragen, um in der geschlossenen Position des Schwenkbügels gegebenenfalls einen seitlichen Halt für eine Strebe des Fahrzeug-Rahmenelements 10 vorzusehen, wie es in Figur 3 zu erkennen ist.

Der Flansch 45 ist ungefähr mittig an der zur Rückwand 7 des Kofferkörpers 3 weisenden Seite des Grundteils 43 ausgebildet und besitzt eine Höhe, die Höher ist als die der Erhöhungen des Flansches 44. Der Flansch 45 besitzt eine sich von einer breiteren Basis nach oben verjüngende Form, sodass eine Schräge gebildet wird. In der Grundplatte 30 ist eine dem Flansch 45 entsprechende Ausnehmung 50 vorgesehen, sodass der Flansch 45 im geschlossenen Zustand des Schwenkbügels 37 im Wesentlichen in der Grundplatte 30 aufgenommen ist, wie in Figur 1 zu erkennen ist.

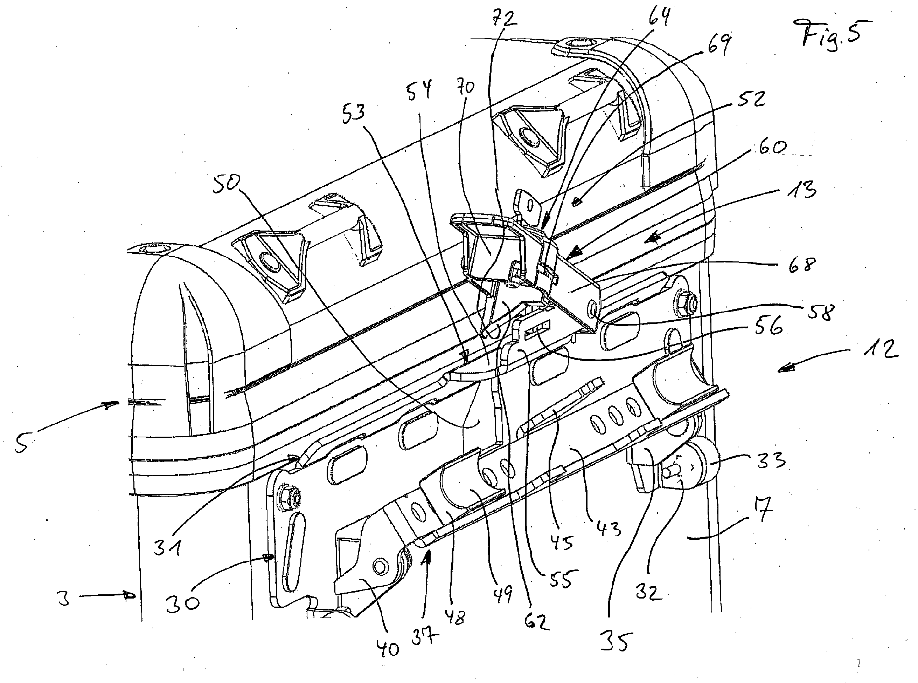

Die Verriegelungseinheit 13, die am besten in der Fig. 5 in einer geöffneten Position zu erkennen ist, wird aus einem starren Tragteil 51 und einem bewegbarer Verriegelungsbügel 52 gebildet.

Der starre Tragteil 51 wird durch einen Flansch 53 der Grundplatte 30 gebildet. Der Flansch 53 ist an einem oberen Ende des schrägen Abschnitts 31 ausgebildet und zwar ungefähr mittig und somit oberhalb der Ausnehmung 50. Der Flansch 53 besitzt einen ersten Flanschbereich 54 und einen zweiten Flanschbereich 55. Der erste Flanschbereich 54 erstreckt sich horizontal und im Wesentlichen senkrecht zur Grundplatte 30. Der zweite Flanschbereich 55 erstreckt sich von einem freien Ende des ersten Flanschbereichs 54 im Wesentlichen senkrecht nach oben und somit im Wesentlichen parallel zur Grundplatte 30. In dem ersten Flanschbereich 54 ist ein sich senkrecht zur Grundplatte 30 erstreckender Schlitz ausgebildet, der in den Figuren nicht erkennbar ist, da er in den Ansichten jeweils durch den zweiten Flanschbereich 54 abgedeckt ist. Dieser Schlitz befindet sich in einer mit der Ausnehmung 50 in der Grundplatte 30 ausgerichteten Position.

In dem zweiten Flanschbereich 55 ist ein sich horizontal erstreckender Schlitz 56 ausgebildet. An einem rechten Ende ist in dem zweiten Flanschbereich 55 eine Schwenkachse 58 aufgenommen, welche den Verriegelungsbügel 52 schwenkbar trägt. Die Schwenkachse 58 ist bevorzugt noch in einem weiteren, nicht dargestellten sich parallel zum zweiten Flanschbereich 55 erstreckenden Flansch des Flansches 53 oder einem alternativen Tragelement aufgenommen, um sie Schwenkachse an wenigsten zwei beabstandeten Punkten zu tragen.

Der Verriegelungsbügel 52 weist einen Hauptkörper 60, eine nicht gezeigte Vorspanneinheit, einen Riegel 62 und einen Schließzylinder 64 auf. Der Hauptkörper 60 besitzt einen Mittelteil 66 sowie zwei Seitenteile 68, die einteilig aus einem geeigneten Material, wie beispielsweise Edelstahl ausgebildet sind. Die Seitenteile 68 erstrecken sich im Wesentlichen senkrecht zum Mittelteil 66, so dass sie im Querschnitt eine U-Form bilden. Im Mittelteil 66 ist eine kreisförmige Öffnung zur Durchführung des Schließzylinders 64 ausgebildet. In einem Seitenteil 68, das im montierten Zustand des Verriegelungsbügels vom Kofferkörper 3 weg weist, ist eine kreisförmige Ausbuchtung im Bereich des Schließzylinders 64 vorgesehen. In diesem Bereich und auch darüber hinaus erstreckt sich in dem Seitenteil 68 ferner ein horizontaler Schlitz 69 zur Aufnahme eines Riegelelements des Schließzylinders 64.

An den rechten Enden der Seitenteile 68 sind jeweils Öffnungen zur Durchführung und Aufnahme der Schwenkachse 58 vorgesehen. Die Schwenkachse 58 ist somit in der Lage, den Verriegelungsbügel 52 schwenkbar bezüglich des Flansches 53 zu lagern. Insbesondere ist der Verriegelungsbügel 52 zwischen einer geschlossenen Position, wie sie zum Beispiel in Fig. 1 gezeigt ist und einer geöffneten Position, wie sie zum Beispiel in Fig. 2 gezeigt ist, schwenkbar.

Am linken Ende sind die Seitenteile 68 des Hauptkörpers 60 jeweils bezüglich des Mittelteils 66 zurückgesetzt und sind abgeschrägt, und zwar derart, dass sich die Seitenteile 68 zum Mittelteil 66 hin erweitern. Hierdurch bildet der Mittelteil 68 eine vorstehende Angriffsfläche für einen Eingriff eines Bedieners zum manuellen Verschwenken des Verriegelungsbügels 52.

Der Hauptkörper 60 weist ferner ein optionales, sich quer zu den Seitenwänden 68 erstreckendes Versteifungselement 70 auf, das linksseitig die U-Form des Hauptkörperteils 60 im Wesentlichen verschließt. Das Versteifungselement 70 kann in geeigneter Weise in dem Hauptkörper 60 befestigt sein, insbesondere durch Schweißen, Löten oder Hartlöten. Alternativ ist es auch möglich das Versteifungselement 70 einteilig, beispielsweise als Gußteil mit dem Hauptkörperteil 60 auszubilden. Das Versteifungselement 70 besitzt benachbart zu der die kreisförmige Ausbuchtung aufweisenden Seitenwand 68 eine Ausnehmung zur wenigstens teilweisen Aufnahme des zweiten Flanschbereichs 55 des Flansches 53, wenn sich der Verriegelungsbügel 52 in der geschlossenen Position befindet. Im Bereich der Drehachse 58 bzw. zwischen der Drehachse 58 und dem Schließzylinder 64 ist eine nicht gezeigte Vorspanneinheit vorgesehen, welche den Verriegelungsbügel 52 in die geschlossene Position vorspannt. Solche Vorspanneinheiten, die beispielsweise aus einer Feder bestehen, sind in der Technik hinlänglich bekannt und müssen daher hier nicht näher erläutert werden.

Der Verriegelungsbügel 52 weist ferner einen Riegel 62 auf, der sich ähnlich wie das Versteifungselement 70 quer zu den Seitenteilen 68 des Hauptkörpers erstreckt, und in geeigneter Weise mit dem Hauptkörper 60 verbunden ist. Der Riegel erstreckt sich über die Seitenteile 68 des Hauptkörpers 60 nach unten und ist derart angeordnet, dass er sich im geschlossenen Zustand durch den oben erwähnten, nicht dargestellten Schlitz, im ersten Flanschteil 54 des Flansches 53 hindurch erstreckt aus dem ersten Flanschteil 54 nach unten vorragt.

Der Riegel 62 weist eine im geschlossenen Zustand sich vertikal erstreckende, zum Koffer weisende erste Seite auf, welche als Verriegelung für den Flansch 45 des Schwenkbügels 37 dient. Auf der vom Kofferkörper 3 wegweisenden Seite besitzt der Riegel 62 eine Führungsschräge 72 zum Eingriff mit dem Flansch 45 während einer Bewegung des Schwenkbügels 37 aus der geöffneten Position in die geschlossene Position. Die Führungsschräge 72 ist derart ausgebildet, dass der Flansch 45 bei einer Bewegung des Schwenkbügels 37 aus der geöffneten Position in die geschlossene Position ein automatisches Verschwenken des Verriegelungsbügels 52 aus einer geschlossenen Position in eine geöffnete Position bewirkt. Wenn der Verriegelungsbügel 37 in der vollständig geschlossenen Position ist, gibt der Flansch 45 den Riegel 62 frei, so dass der Verriegelungsbügel 52 durch die nicht gezeigte Vorspanneinheit automatisch in die geschlossene Position zurückkehrt. Nun blockiert der Riegel 62 mit seiner zum Kofferkörper 3 weisenden Seite eine Bewegung des Flansches 45 in die entgegengesetzte Richtung, und somit eine Bewegung des Schwenkbügels 37 aus der geschlossenen Position heraus. Natürlich ist es auch möglich, den Verriegelungsbügel 52 während der entsprechenden Schwenkbewegung des Schwenkbügels 37 manuell in die geöffnete Position zu bewegen und anschließend in die geschlossene Position zurückkehren zu lassen. Zum Lösen des Schwenkbügels 37 muss der Verriegelungsbügel 52 manuell in die geöffnete Position bewegt werden, so dass der Schwenkbügel 37 wieder in die geöffnete Position schwenken kann.

Der Schließzylinder 64 ist in der Öffnung im Mittelteil 66 des Hauptkörpers 60 aufgenommen und erstreckt sich im Wesentlichen in der U-Form des Hauptkörpers. Er ist in geeigneter Weise darin befestigt. Ein Schließriegel des Schließzylinders 64 kann über einen Schlüssel in den Schlitz 56 im zweiten Flanschteil 55 und den Schlitz 69 in einen Seitenteil 66 hinein und aus diesem heraus bewegt werden. Wie der Fachmann erkennen kann, ist es hierdurch möglich, die Verriegelungseinheit 13 im geschlossenen Zustand zu verschließen, um ein unbefugtes Öffnen des Verriegelungsbügels 52 und somit ein Entfernen des Motorradkoffers 1 vom Fahrzeug- Rahmenelement 10 zu verhindern.

Nachfolgend wird nunmehr das Fahrzeug-Rahmenelement 10, an dem der Motorradkoffer 1 befestigt werden soll, kurz erläutert. Das Fahrzeug-Rahmenelement 10 besteht im Wesentlichen aus zwei sich horizontal erstreckenden Streben 80 mit einem runden Querschnitt, sowie zwei sich vertikal erstreckenden Streben 82 mit einem runden Querschnitt. Die Streben 80, 82 sind jeweils über abgerundete Eckverbinder 84 miteinander verbunden, so dass sie eine im Wesentlichen rechteckige Form bilden.

Nachfolgend wird ein Befestigungsvorgang des Motorradkoffers 1 an dem Fahrzeug-Rahmenelement 10 unter Bezugnahme auf die Figuren näher erläutert.

Der Motorradkoffer 1 wird in einer schrägen Ausrichtung zunächst an der unteren sich horizontal erstreckenden Strebe 80 des Fahrzeug-Rahmenelements 10 angesetzt. Dies geschieht, indem die unteren Stützelemente 20 schräg an der unteren sich horizontal erstreckenden Strebe 80 angesetzt werden. Dabei sollte der Motorradkoffer 1 ungefähr zentriert zwischen den sich vertikal erstreckenden Streben 82 des Fahrzeug-Rahmenelements 10 angesetzt werden.

Der Schwenkhebel 37 befindet sich in einer ausgeschwenkten Position. Durch ein Schwenken des Motorradkoffers 1 - auf der unteren Strebe 80 - aus der schrägen Position in eine aufrechte Position kommen die oberen Stützelemente 48 automatisch mit der oberen sich horizontal erstreckenden Strebe 80 in Eingriff. Die obere sich vertikal erstreckende Strebe 80 wird in der Vertiefung 49 der oberen Stützelement 48 aufgenommen. Durch ein weiteres Schwenken des Motorradkoffers 1 wird nun der Schwenkhebel 37 mitgenommen und aus der geöffneten Position automatisch in die geschlossene Position geschwenkt. Dabei überqueren die oberen Stützelemente 48 - von den unteren Stützelementen 20 aus gesehen - die Drehachsen 56 des Schwenkbügels 37. Während dieses Schwenkvorgangs wird somit ein Klemmdruck, der von den Stützelementen 20, 48 auf die sich horizontal erstreckenden Streben 80 ausgeübt wird zunächst erhöht, und fällt anschließend wieder ab. Dabei wird natürlich in der geschlossenen Position eine Grundspannung und Klemmkraft zum Halten des Motorradkoffers 1 aufrecht erhalten.

Bei der Schwenkbewegung des Schwenkbügels 37 wird wie zuvor beschrieben automatisch der Verriegelungsbügel 52 aus einer geschlossenen Position in eine geöffnete Position gebracht, und kehrt dann in der geschlossenen Position des Schwenkbügels 37 wieder in die geschlossene Position zurück. Dies geschieht automatisch während einer entsprechenden Schwenkbewegung des Motorradkoffers 1 auf der unteren Strebe 80. In der aufrechten Position ist der Motorradkoffer 1 somit automatisch verriegelt. Natürlich ist es auch möglich den Verriegelungsbügel 52 manuell zu betätigen. Durch die Ausrichtelemente 27, 33 wird der Motorradkoffer 1 ferner hinsichtlich der sich vertikal erstreckenden Streben 82 zentriert und stabilisiert.

Zum Lösen des Motorradkoffers 1 wird einfach der Verriegelungsbügel 52 manuell in seine geöffnete Position bewegt und der Motorradkoffer 1 anschließend nach außen geschwenkt. Dadurch, dass bei dieser Schwenkbewegung die oberen Stützelemente 48 von den unteren Stützelementen 20 aus gesehen wiederum über die Drehachsen des Schwenkbügels 37 hinweg bewegt werden müssen, fällt der Motorradkoffer 1 nicht automatisch nach außen, sondern muss aktiv geschwenkt werden. Die hierfür erforderliche Kraft kann durch eine geeignete Auswahl der Geometrie eingestellt werden, wie der Fachmann erkennen wird. Mit anderen Worten, wird der Motorradkoffer 1 selbst bei geöffnetem Verrieglungsbügel 52 zunächst in der aufrechten Position gehalten, so dass ein unbeabsichtigtes Abkippen desselben und ein ggf. hiermit bedingter Absturz des Motorradkoffers 1 verhindert wird.

Der erfindungsgemäße Motorradkoffer 1 ermöglicht somit eine einfache Befestigung an einem Fahrzeug-Rahmenelement 10 sowie ein einfaches Lösen, ohne die Notwendigkeit den Koffer zu öffnen. Ferner ist sowohl die Montage als auch das Lösen leicht mit einer Hand möglich. Dadurch, dass der Verriegelungsbügel 52 verschließbar ist, kann der Motorradkoffer 1 auch dauerhaft montiert bleiben, ohne dass zu befürchten ist, dass er unbefugt entfernt wird.

Obwohl die Erfindung in Kombination mit einem Motorradkoffer näher erläutert wurde, sei bemerkt, dass sie auch in Kombination mit anderen Transportvorrichtungen zur Befestigung an einem Fahrzeug-Rahmenelement eingesetzt werden kann. Insbesondere werden Dachboxen und Fahrradträger in Betracht gezogen. Dabei können diese natürlich auch in einer anderen Ausrichtung, insbesondere zwischen Horizontal beabstandeten Streben angebracht werden. Ferner ist die Formulierung Fahrzeug-Rahmenelement mit wenigstens zwei parallelen Streben weit zu verstehen und soll jegliche Anordnung von zwei an einem Fahrzeug angebrachte parallele Streben umfassen, auch wenn sie kein einheitliches Element bilden, wie es zum Beispiel bei der Dachreling von Fahrzeugen oder bei Dachträgern der Fall ist.

## Patentansprüche

1. Transportvorrichtung (1) zur Befestigung an einem Fahrzeug-Rahmenelement (10) mit wenigstens zwei parallelen Streben, wobei die Transportvorrichtung (1) folgendes aufweist:
einen Gepäckaufnahmebereich;
wenigstens ein Seitenteil (7);
wenigstens ein erstes am Seitenteil (7) befestigtes Stützelement (20), das wenigstens eine erste Vertiefung (21) zur wenigstens teilweisen Aufnahme einer ersten der Streben aufweist, wobei das erste Stützelement (20) starr am Seitenteil (7) befestigt ist und die erste Vertiefung (21) in eine erste Richtung weist;
wenigstens ein zweites am Seitenteil (7) befestigtes Stützelement (48), das eine zweite Vertiefung (49) zur wenigstens teilweisen Aufnahme einer zweiten der Streben aufweist, wobei das zweite Stützelement (48) um eine Schwenkachse (36) herum schwenkbar am Seitenteil (7) befestigt ist, um zwischen einer geöffneten und einer geschlossenen Position bewegbar zu sein, wobei die zweite Vertiefung (49) in der geschlossenen Position des zweiten Stützelements (48) in eine zweite Richtung um 180° entgegengesetzt zur ersten Richtung weist, und wobei das zweite Stützelement (48) bei einer Bewegung zwischen der geöffneten und der geschlossenen Position aus der Sicht des ersten Stützelements (20) über die Schwenkachse (36) hinweg bewegt wird;
wenigstens ein Riegel (45), der in einer starren Beziehung zu dem zweiten Stützelement (48) und mit diesem schwenkbar am Seitenteil (7) befestigt ist;
wenigstens eine Verriegelungseinheit (13), die am Seitenteil (7) befestigt ist und einen feststehenden Teil (51) und einen schwenkbaren Teil (52) aufweist, **dadurch gekennzeichnet, dass** der schwenkbare Teil (52) zwischen einer geschlossenen Position und einer geöffneten Position bewegbar ist, und in der geschlossenen Position in der Lage ist den Riegel (45) in einer geschlossenen Position des zweiten Stützelements zu verriegeln.

2. Transportvorrichtung (1) nach Anspruch 1, wobei der schwenkbare Teil (52) der Verriegelungseinheit (13) in die geschlossene Stellung vorgespannt ist und so am Seitenteil (7) angebracht ist, dass er bei einer Bewegung des zweiten Stützelements (48) von der geöffneten Position in die geschossene Position den Riegel (45) kontaktiert, sich in eine geöffnete Position bewegt und anschließend automatisch in die geschlossene Position zurückkehrt, in der er den Riegel (45) verriegelt.

3. Transportvorrichtung (1) nach einem der vorhergehenden Ansprüche, wobei die Verriegelungseinheit (52) ein Schloß (64) aufweist, das so angeordnet ist, dass es in einer abgeschlossenen Position eine Bewegung zwischen dem feststehenden Teil (51) und dem bewegbaren Teil (52) verhindert und in einer geöffneten Position freigibt.

4. Transportvorrichtung (1) nach einem der vorhergehenden Ansprüche, wobei die Verriegelungseinheit (13) sowie die ersten und zweiten Stützelemente (20, 48) an derselben Seite des Seitenteils (7) befestigt sind, welche vom Gepäckaufnahmebereich weg weist.

5. Transportvorrichtung (1) nach einem der vorhergehenden Ansprüche, wobei der Riegel (45) und das zweite Stützelement (48) an einem gemeinsamen Schwenkbügel (37) angebracht sind.

6. Transportvorrichtung (1) nach einem der vorhergehenden Ansprüche, wobei das erste und/oder das zweite Stützelement wenigstens teilweise ein elastisches Material aufweist, um eine Bewegung der Vertiefungsoberfläche in die erste und/oder zweite Richtung zu erlauben.

7. Transportvorrichtung (1) nach einem der vorhergehenden Ansprüche, wobei die Transportvorrichtung ein Motorradkoffer ist.

8. Fahrzeug mit einem Fahrzeug-Rahmenelement (10) mit wenigstens zwei parallelen Streben, und einer am Fahrzeug-Rahmenelement (10) angebrachten Transportvorrichtung (1) nach einem der vorhergehenden Ansprüche.

9. Fahrzeug nach Anspruch 8, wobei das Fahrzeug ein Motorrad ist.

## Claims

1. A transportation device (1) for fastening to a vehicle frame element (10) having at least two parallel struts, wherein the transportation device (1) comprises:
a luggage accommodating region;
at least one side part (7);
at least one first supporting element (20) which is fastened to the side part (7) and comprises at least one first recess (21) for at least partially accommodating a first one of the struts, wherein the first supporting element (20) is rigidly fastened to the side part (7) and the first recess (21) points in a first direction;
at least one second supporting element (48) which is fastened to the side part (7) and comprises a second recess (49) for at least partially accommodating a second one of the struts, wherein the second supporting element (48) is fastened to the side part (7) such as to be pivotal about a swivel pin (36) in order to be movable between an opened and a closed position, wherein, in the closed position of the second supporting element (48), the second recess (49) points in a second direction that is opposed by 180° to the first direction, and wherein, upon a movement between the opened and the closed position, the second supporting element (48) is moved over the swivel pin (36) as seen from the first supporting element (20);
at least one latching member (54) which is fastened in a rigid relationship to the second supporting element (48) and is pivotal therewith on the side part (7);
at least one locking unit (13) which is fixed to the side part (7) and comprises a stationary part (51) and a pivotal part (52), **characterized in that** the pivotal part (52) is movable between a closed position and an opened position, and in the closed position, is configured to lock the latching member (45) in a closed position of the second supporting element.

2. The transportation device (1) according to Claim 1, wherein the pivotal part (52) of the locking unit (13) is biased into the closed position and is fastened on the side part (7) in such a way that it contacts the latching member (45) upon movement of the second supporting element (48) from the opened position into the closed position, then moves into an opened position and subsequently returns automatically to the closed position in which it locks the latching member (45).

3. The transportation device (1) according to any one of the preceding Claims, wherein the locking unit (52) comprises a lock (64) which is arranged in such a way that it prevents a movement between the stationary part (51) and the movable part (52) in a locked position and permits movement in an opened position.

4. The transportation device (1) according to any one of the preceding Claims, wherein the locking unit (13) and also the first and second supporting elements (20, 48) are fastened to the same side of the side part (7) which faces away from the luggage accommodating region.

5. The transportation device (1) according to any one of the preceding Claims, wherein the latching member (45) and the second supporting element (48) are attached to a common pivotal bracket (37).

6. The transportation device (1) according to any one of the preceding Claims, wherein the first and/or the second supporting element consist at least partially of a resilient material in order to permit a movement of the recessed surface in the first and/or second direction.

7. The transportation device (1) according to any one of the preceding Claims, wherein the transportation device is a motorcycle case or pannier.

8. A vehicle incorporating a vehicle frame element (10) comprising at least two parallel struts, and a transportation device (1) according to any one of the preceding Claims mounted on the vehicle frame element (10).

9. The vehicle according to Claim 8, wherein the vehicle is a motorcycle.

## Revendications

1. Dispositif de transport (1) destiné à être fixé à un élément de châssis de véhicule (10) ayant au moins deux montants parallèles, dans lequel le dispositif de transport (1) comprend :
une zone de réception de bagages ;
au moins une partie latérale (7) ;
au moins un premier élément de support (20) qui est fixé à la partie latérale (7) et qui comprend au moins un premier évidement (21) pour recevoir au moins partiellement un premier des montants, dans lequel le premier élément de support (20) est fixé de façon rigide à la partie latérale (7) et le premier évidement (21) est orienté dans une première direction ;
au moins un deuxième élément de support (48) qui est fixé à la partie latérale (7) et qui comprend un deuxième évidement (49) pour recevoir au moins partiellement un deuxième des montants, dans lequel le deuxième élément de support (48) est fixé à la partie latérale (7) de façon à pouvoir pivoter autour d'un axe de pivotement (36) pour pouvoir être déplacé entre une position ouverte et une position fermée, dans lequel, dans la position fermée du deuxième élément de support (48), le deuxième évidement (49) est orienté dans une deuxième direction qui est opposée de 180° à la première direction, et dans lequel, pendant un déplacement entre la position fermée et la position ouverte, le deuxième élément de support (48) est déplacé sur l'axe de pivotement (36) vu du premier élément de support (20) ;
au moins un élément de verrou (54) qui est fixé de façon rigide au deuxième élément de support (48) et qui est fixé à pivotement avec celui-ci sur la partie latérale (7) ;
au moins une unité de verrouillage (13) qui est fixée à la partie latérale (7) et qui comprend une partie fixe (51) et une partie pivotante (52), **caractérisé en ce que** la partie pivotante (52) peut être déplacée entre une position fermée et une position ouverte, et, en position fermée, est configurée pour verrouiller l'élément de verrouillage (45) dans une position fermée du deuxième élément de support.

2. Dispositif de transport (1) selon la revendication 1, dans lequel la partie pivotante (52) de l'unité de verrouillage (13) est sollicitée vers la position fermée et est fixée à la partie latérale (7) de sorte qu'elle contacte l'élément de verrouillage (45) pendant un mouvement du deuxième élément de support (48) de la position fermée à la position ouverte, puis se déplace vers une position ouverte et retourne ensuite automatiquement dans la position fermée dans laquelle elle verrouille l'élément de verrouillage (45).

3. Dispositif de transport (1) selon l'une quelconque des revendications précédentes, dans lequel l'unité pivotante (52) comprend un verrou (64) qui est agencé de telle sorte qu'il empêche un déplacement entre la partie fixe (51) et la partie mobile (52) dans une position verrouillée et permet un mouvement dans une position ouverte.

4. Dispositif de transport (1) selon l'une quelconque des revendications précédentes, dans lequel l'unité de verrouillage (13) ainsi que les premier et deuxième éléments de support (20, 48) sont fixés du même côté de la partie latérale (7) qui fait face à distance de la zone de réception des bagages.

5. Dispositif de transport (1) selon l'une quelconque des revendications précédentes, dans lequel l'élément de verrouillage (45) et le deuxième élément de support (48) sont fixés à un support de pivot commun (37).

6. Dispositif de transport (1) selon l'une quelconque des revendications précédentes, dans lequel le premier et/ou le deuxième élément de support est constitué au moins partiellement en un matériau élastique pour permettre un déplacement de la surface de l'évidement dans la première et/ou la deuxième direction.

7. Dispositif de transport (1) selon l'une quelconque des revendications précédentes, dans lequel le dispositif de transport est un étui ou une sacoche de moto.

8. Véhicule comportant un élément de châssis de véhicule (10) comprenant au moins deux montants parallèles, et un dispositif de transport (1) selon l'une quelconque des revendications précédentes monté sur l'élément de châssis de véhicule (10).

9. Véhicule selon la revendication 8, dans lequel le véhicule est une motocyclette.
